# EUROPÄISCHE PATENTSCHRIFT

(11) **EP 4 182 370 B1**
(45) Veröffentlichungstag und Bekanntmachung des Hinweises auf die Patenterteilung: **28.05.2025**
(21) Anmeldenummer: 21742396.1
(22) Anmeldetag: 13.07.2021
(51) Int. Cl.: C08G 18/24, C08G 18/28, C08G 18/48, C08G 18/76, C08J 5/04, C08J 5/10, C08K 3/34, C08K 5/3415, C08K 7/06, C08K 3/04, C08K 5/101, C08K 5/353

(54) **POLYURETHANREAKTIVSYSTEM FÜR PULTRUSION**
POLYURETHANE REACTIVE SYSTEM FOR PULTRUSION
SYSTÈME RÉACTIF POLYURÉTHANE POUR LA PULTRUSION

(30) Priorität: 15.07.2020 EP 20185854
(43) Veröffentlichungstag der Anmeldung: 24.05.2023
(73) Patentinhaber: Covestro Deutschland AG, 51373 Leverkusen (DE)
(72) Erfinder: REITHMEIER, Richard, 51069 Köln (DE); HOFFMANN, Andreas, 50259 Pulheim (DE); RASSELNBERG, Harald, 41541 Dormagen (DE); SCHMIDT, Heike, 51377 Leverkusen (DE)
(74) Vertreter: Levpat
(86) Internationale Anmeldenummer: PCT/EP2021/069394
(87) Internationale Veröffentlichungsnummer: WO 2022/013182

(56) Entgegenhaltungen:
- WO-A1-2013/127850
- WO-A1-2016/188805
- WO-A1-2018/192927
- US-A1- 2008 090 921

## Beschreibung

Die vorliegende Erfindung betrifft Polyurethanreaktivsysteme für die Herstellung von Pultrudaten mit Verstärkungsfasern und deren Verwendung.

Die Pultrusion, auch Strangziehverfahren genannt, ist ein kontinuierliches Verfahren zur Herstellung von faserverstärkten Profilen mit konstantem Querschnitt. Eine Pultrusionsanlage besteht typischerweise aus einer Imprägniereinheit und einem beheizten Werkzeug sowie einer Abzugsanlage, die den Prozess in Gang hält. Die Imprägnierung der Fasern erfolgt in einem offenen Bad oder in einer geschlossenen Injektionsbox. Für duroplastische Reaktivharze, wie z.B. Polyurethane werden geschlossene Injektionsboxen bevorzugt. Die Injektionsboxen können als separate Einheit vor dem eigentlichen Formwerkzeug angebracht oder aber in das Formwerkzeug integriert sein ("Direktinjektion"). Im beheizten Werkzeug erfolgen dann Formgebung und Aushärtung des Composites. Das fertige Profil wird mittels einer Abzugsanlage aus dem Werkzeug gezogen und abschließend in die gewünschten Längen geschnitten.

Um den Pultrusionsprozess möglichst effizient zu gestalten, werden hohe Prozessgeschwindigkeiten bei sehr guten mechanischen Eigenschaften des Pultrudats und einer hohen Oberflächengüte angestrebt. Nicht zuletzt spiegeln niedrige Abzugskräfte < 3 kN einen flüssigen Prozess wider. In verschiedenen Patenten werden unterschiedliche Lösungen für einen effektiven Pultrusionsprozess mit PU-Harzen vorgestellt.

In US2008/090966 A1 wird ein Reaktionssystem zur Herstellung eines faserverstärkten Verbundstoffs gemäß dem Pultrusionsverfahren offenbart, das aus einem kontinuierlichen faserverstärkenden Material und einer nicht mischbaren Polyurethanformulierung hergestellt ist, die eine Polyisocyanatkomponente enthält, die mindestens ein Polyisocyanat enthält, und eine isocyanatreaktive Komponente, die mindestens eine isocyanatreaktive Verbindung enthält. Dabei wird beschrieben, dass durch Inkompatibilität der verwendeten Polyetherpolyole innerhalb der Isocyanat-reaktiven Verbindung, und/oder Inkompatibilität zwischen der Isocyanat-reaktiven Verbindung und des Isocyanates ein verbesserter Pultrusionsprozess erreicht werden kann.

Üblicherweise werden der isocyanatreaktiven Komponente unlösliche Feststoffe als Additive zugegeben, um bestimmte Funktionen zu erfüllen, die von einphasigen isocyanatreaktiven Komponenten nicht gleichermaßen erfüllt werden können. Folglich handelt es sich um mehrphasige isocyanatreaktive Komponenten. Dabei wird mehrphasig definiert als ein Auftreten von mehr als einer Phase bei Raumtemperatur innerhalb von 6 Monaten. Es werden z.B. Feststoffe als Wasserbinder (z.B. WO 2011/067246 A1, WO2018/192927 A1, WO2013/127850 A1, US 2008/0090921 A1), Füllstoffe, wie z.B. Kreide, Quartzsand, Gips (EP3380539 A1), oder gekapselte Katalysatoren (WO 2018/162519 A1) zur Reaktionskontrolle eingesetzt. Neben der genannten flüssig/fest-Mehrphasigkeit tritt auch häufig eine flüssig/flüssig-Mehrphasigkeit auf, ähnlich wie sie bei einem Öl/Wasser- Gemisch zu beobachten ist. In verschiedenen Veröffentlichungen wird diese Phaseninstabilität sogar als notwendig beschrieben, um niedrige Abzugskräfte zu erreichen (z.B. US 2008/090966 A1).

WO 2016/188805 offenbart ein Verfahren zur Herstellung von Polyurethan-Polyisocyanuratverbindungen, die zur Herstellung von Fahrzeugteilen oder bei der Herstellung von Rotorblättern für Windkraftanlagen genutzt werden können. Weder wird ein Pultrusionsverfahren noch die Verwendung eines erfindungsgemäßen Wasserbinders B5) noch die Verwendung der erfindungsgemäßen Polyole B2) oder B3), geschweige denn in den erfindungsgemäßen Mengenverhältnissen offenbart.

Neben den aufgezeigten Vorteilen mehrphasiger Systeme fest/flüssig, und/oder flüssig/flüssig bestehen auch folgende Nachteile. So stellt z.B. bereits die Logistik bei der Abfüllung und beim Transport einer mehrphasigen isocyanatreaktiven Komponente eine große Herausforderung dar, da sichergestellt werden muss, trotz Mehrphasigkeit ein homogenes Gemisch vorliegen zu haben. An der Pultrusionsanlage muss weiterhin eine stetige, ausreichende Durchmischung gewährleistet sein, um eine gleichbleibende Zusammensetzung und folglich Profilqualität im Pultrusionsprozess erreichen zu können. Nicht zuletzt sind in der Dosiereinheit Filter verbaut, um z.B. Verunreinigungen aus dem Tränkungsharz abzutrennen. Diese Filter können durch Feststoffanteile in der Formulierung verstopfen und den Prozess somit zum Erliegen bringen. Ebenfalls sind die eingesetzten Pumpen gegenüber dem Einsatz von Feststoffen empfindlich.

Aufgabe der vorliegenden Erfindung war es daher, ein Pultrusionsverfahren zu entwickeln, bei dem die Nachteile der bekannten Verfahren wie beispielswiese eine Mehrphasigkeit der isocyanatreaktiven Komponente und/oder nur bedingt zufriedenstellende mechanische Eigenschaften des resultierenden Pultrudats zumindest teilweise überwunden werden, ohne die Effizienz dieser Verfahren übermäßig zu beeinträchtigen. Weiterhin soll der Transport des Reaktivsystems zur Pultrusionsanlage verbessert werden, sowie die Verarbeitbarkeit des Reaktivsystems vereinfacht werden, indem beispielsweise Pumpen und Filter keinen Feststoffen ausgesetzt werden. Diese Aufgabe konnte überraschend durch das erfindungsgemäße Verfahren, mit dem unter Einsatz des erfindungsgemäßen Polyurethanreaktivsystems die erfindungsgemäßen Polyurethanpultrudate erhalten wurden, entsprechend den beigefügten Ansprüchen, gelöst werden.

Gegenstand der Erfindung ist ein Polyurethanreaktivsystem umfassend
eine Isocyanatkomponente A),
eine isocyanatreaktive Komponente B) umfassend
3 - 13 Gew.-% eines Polyetherpolyols B1) mit einer Hydroxylzahl (OHZ) von 20 bis 50 mg KOH/g, erhältlich aus der Umsetzung einer ersten H-funktionellen Starterverbindung mit einer Funktionalität f von ≥2 bis ≤4 mit Ethylenoxid und Propylenoxid,
15 - 37 Gew.-% eines Polyetherpolyols B2) mit einer Hydroxylzahl (OHZ) von 900 - 1100 mg KOH/g, erhältlich aus der Umsetzung einer zweiten H-funktionellen Starterverbindung mit einer Funktionalität f von ≥2 bis ≤4 mit einem zweiten Alkylenoxid,
50 - 72 Gew.-% eines Polyetherpolyols B3) mit einer Hydroxylzahl (OHZ) > 50 bis < 900 mg KOH/g, erhältlich aus der Umsetzung einer dritten H-funktionellen Starterverbindung mit einem dritten Alkylenoxid,
einen oder mehrere Katalysatoren B4) und
ein Trocknungsmittel B5), das ein Trialkylorthoformat, ein p-Toluolsulfonylisocyanat, ein Oxazolidin oder Mischungen daraus ist,
wobei die Summe der Gew.-% der Komponenten B1) und B2) ≤ 40 Gew.-%, bezogen auf die Summe der Mengen an B), C) und D), beträgt, und die Summe der Gew.-% der Komponenten B1), B2), B3), B4) und B5) ≥ 90 Gew.-%, bezogen auf die Summe der Mengen an B), C) und D), beträgt,
ein internes Trennmittel C),
sowie gegebenenfalls weitere Hilfs- und Zusatzstoffe D),
wobei die Summe der Gew.-% der Komponenten B), C) und gegebenenfalls D) 100 Gew.-% beträgt,
und wobei die Hydroxylzahlen (OHZ) der Polyetherpolyole B1), B2) und B3) mittels ISO 14900 bestimmt wurde.

In einer Ausführungsform der Erfindung werden die Komponenten A), B), C) und gegebenenfalls D) in solchen Mengen eingesetzt, dass das Verhältnis der Anzahl der NCO-Gruppen in (A) zu der Summe der Anzahl der isocyanatreaktiven Gruppen in (B), (C) und (D) multipliziert mit 100 (der sogenannte Index oder Kennzahl) einen Wert von 100-150 aufweist.

Eine isocyanatreaktive Komponente im Sinne dieser Anmeldung ist eine Komponente, die Verbindungen umfasst, die mit der Isocyanatgruppe Reaktionen eingehen können, z.B. Hydroxylgruppen (-OH), Amingruppen (-NH₂ oder -NRH, wobei R ein organischer Rest ist) oder Thiogruppen (-SH).

Die Hydroxylzahl (OHZ) im Sinne dieser Anmeldung ist die Hydroxylzahl, das heißt die Menge Kaliumhydroxid in Milligramm, welche der bei einer Acetylierung von einem Gramm Substanz gebundenen Menge Essigsäure gleichwertig ist. Die OHZ wurde für diese Anmeldung bestimmt gemäß ISO 14900.

Die Polyisocyanatkomponente A) umfasst bevorzugt zumindest eines von monomerem Methylendi(phenylisocyanat) (MDI), oligomerem MDI, polymerem MDI und Mischungen daraus.

Der NCO-Gehalt der Polyisocyanatkomponente A) liegt vorzugsweise über 25 Gew.-%, bevorzugt über 30 Gew.-%, besonders bevorzugt über 31,5 Gew.-%. Die Funktionalität der Polyisocyanatkomponente A) liegt vorzugsweise bei 2,1 bis 2,9. Die Viskosität der Polyisocyanatkomponente A) liegt vorzugsweise bei ≤ 500 mPas (bei 25 °C), gemessen nach DIN 53019-1.

Zusätzlich können die üblichen aliphatischen, cycloaliphatischen, araliphatischen Di- und/oder Polyisocyanate und insbesondere aromatischen Isocyanate zum Einsatz kommen, welche aus der Polyurethanchemie bekannt sind. Beispiele solcher geeigneter Polyisocyanate sind Ethylendiisocyanat, 1,4-Butylendiisocyanat, 1,5-Pentandiisocyanat, 1,6-Hexamethylendiisocyanat (HDI), 1,12-Dodecandiisocyant, Cyclobutan-1,3-diisocyanat, Cyclohexan-1,3- und -1,4-diisocyanat und Mischungen dieser Isomere, Isophorondiisocyanat (IPDI), 2,4- und 2,6- Hexahydrotoluylendiisocyanat und Mischungen dieser Isomere, 2,2,4- und/oder 2,4,4-Trimethylhexamethylendiisocyanat, Bis(4,4'-, 2,4'- und 2,2'-isocyanatocyclo-hexyl)methan oder Mischungen dieser Isomere, und aromatische Isocyanate der allgemeinen Formel R(NCO)z, wobei R ein polyvalenter organischer Rest ist, der einen Aromaten aufweist, und z eine ganze Zahl von mindestens 2 ist. Beispiele hierfür sind 1,3-Diisocyanatoo-xylol, 1,3-Diisocyanato-p-xylol, 1,3-Diisocyanato-m-xylol, 2,4-Diisocyanato-1-chlorobenzol, 2,4-Diisocyanato-1-nitro-benzol, 2,5-Diisocyanato-1-nitrobenzol, m-Phenylendiisocyanat, p-Phenylendiisocyanat, 2,4-Toluylendiisocyanat, 2,6-Toluylendiiso¬cyanat, Mischungen aus 2,4- and 2,6-Toluylendiisocyanat, 1,5-Naphthalindiisocyanat, 1-Methoxy-2,4-phenylendiisocyanat, 4,4'-Biphenylendiisocyanat, 3,3'-Dimethyl-4,4'-diphenylmethandiisocyanat, und 3,3'-Dimethyldiphenylmethan-4,4'-diisocyanat; Triisocyanate, wie 4,4',4"-Triphenylmethantriisocyanat und 2,4,6-Toluoltriisocyanat, und Tetraisocyanate, wie 4,4'-Dimethyl-2,2'-5,5'-diphenylmethantetraisocyanat sowie, 1,3- und/oder 1,4-Bis-(2-isocyanato-prop-2-yl)-benzol (TMXDI), 1,3-Bis-(isocyanatomethyl)benzol (XDI).

Neben den vorstehend genannten Isocyanaten können auch modifizierte Isocyanate, wie z.B. solche mit Uretdion-, Isocyanurat-, Carbodiimid-, Uretonimin-, Allophanat- oder Biuretstruktur, eingesetzt werden, sowie modifizierte Isocyanate in Form von Prepolymeren, erhältlich aus der Umsetzung eines, oder mehrerer Polyisocyanate mit einem oder mehreren Polyolen Es ist möglich, dass das Isocyanat ein Präpolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Die Polyisocyanatkomponente A) besteht besonders bevorzugt aus mindestens einem von monomerem MDI, oligomerem MDI, polymerem MDI und Mischungen daraus.

Das erfindungsgemäße Polyetherpolyol B1) mit einer Hydroxylzahl (OHZ) von 20 bis 50 mg KOH/g ist erhältlich aus der Umsetzung einer ersten H-funktionellen Starterverbindung mit einer Funktionalität f von ≥2 bis ≤4 mit Ethylenoxid und Propylenoxid.

Das Polyetherpolyol B1) kann dabei eine oder mehrere Polyol(e) sein.

Bevorzugt handelt es sich bei der ersten H-funktionellen Starterverbindung um eine oder mehrere Verbindung(en) ausgewählt aus der Gruppe bestehend aus Ethylenglykol, Propylenglykol, Diethylenglykol, Dipropylenglykol, Triethylenglykol, Tripropylenglykol, 1,4-Butandiol, 1,6-Hexandiol, Glycerin, Trimethylolpropan, Pentaerythrit, Ethylendiamin und Triethanolamin., besonders bevorzugt 1,2- und 1,3- Propylenglykol, Diethylenglykol, Glycerin, Trimethylolpropan und ganz besonders bevorzugt um Glycerin und Trimethylolpropan.

In einer Ausführungsform der Erfindung beträgt für das Polyetherpolyol B1) der Massenanteil an Propylenoxid 60 bis 90 Gew.-%, bevorzugt 70 bis 85 Gew.-% bezogen auf die Summe an eingesetztem Ethylenoxid und Propylenoxid.

In einer bevorzugten Ausführungsform der Erfindung ist das Polyetherpolyol B1) das Polyetherpolyol B1) erhältlich durch
i) Umsetzung der ersten H-funktionellen Starterverbindung mit Propylenoxid in Gegenwart eines ersten Katalysators unter Bildung eines ersten Intermediats
ii) Umsetzung des ersten Intermediats mit Ethyelenoxid unter Bildung eines Blockcopolymers.

In einer alternativen, weniger bevorzugten Ausführungsform der Erfindung ist das Polyetherpolyol B1) durch Copolymerisation von Ethylenoxid und Propylenoxid an die erste H-funktionelle Starterverbindung in Gegenwart eines ersten Katalysators erhältlich unter Bildung eines Copolymers.

In einer Ausführungsform der Erfindung ist der erste Katalysator Kaliumhydroxid, Natriumhydroxid, Cäsiumhydroxid ein Doppelmetallcyanid-Katalysator (DMC-Katalysator) und/oder ein Amin, bevorzugt Kaliumhydroxid.

Das erfindungsgemäße Polyetherpolyol B2) mit einer Hydroxylzahl (OHZ) von 900 - 1100 mg KOH/g ist erhältlich aus der Umsetzung einer zweiten H-funktionellen Starterverbindung mit einer Funktionalität f von ≥2 bis ≤4 mit einem zweiten Alkylenoxid.

Das Polyetherpolyol B2) kann dabei eine oder mehrere Polyol(e) sein.

Bevorzugt handelt es sich bei der zweiten H-funktionellen Starterverbindung um eine oder mehrere Verbindung(en) ausgewählt aus der Gruppe bestehend aus Ethylenglykol, Propylenglykol, Diethylenglykol, Dipropylenglykol, Triethylenglykol, Tripropylenglykol, 1,4-Butandiol, 1,6-Hexandiol, Glycerin, Trimethylolpropan, Pentaerythrit, Ethylendiamin und Triethanolamin., besonders bevorzugt 1,2- und 1,3- Propylenglykol, Diethylenglykol, Glycerin, Trimethylolpropan und ganz besonders bevorzugt um Glycerin und Trimethylolpropan.

In einer Ausführungsform der Erfindung ist das Polyetherpolyol B2) durch Copolymerisation des zweiten Alkylenoxids an die zweite H-funktionelle Starterverbindung in Gegenwart eines zweiten Katalysators erhältlich.

In einer Ausführungsform der Erfindung ist der zweite Katalysator Kaliumhydroxid, Natriumhydroxid, Cäsiumhydroxid ein Doppelmetallcyanid-Katalysator (DMC-Katalysator) und/oder ein Amin bevorzugt Kaliumhydroxid.

In einer Ausführungsform der Erfindung ist das zweite Alkylenoxid Propylenoxid und/oder Ethylenoxid, bevorzugt Propylenoxid.

Das erfindungsgemäße Polyetherpolyol B3) mit einer Hydroxylzahl (OHZ) von > 50 bis < 900 mg KOH/g ist erhältlich aus der Umsetzung einer dritten H-funktionellen Starterverbindung mit Propylenoxid.

Das Polyetherpolyol B3) kann dabei eine oder mehrere Polyol(e) sein.

In einer Ausführungsform weist die dritte H-funktionelle Starterverbindung eine Funktionalität f von ≥2 bis ≤4 auf.

Bevorzugt handelt es sich bei der dritten H-funktionellen Starterverbindung um eine oder mehrere Verbindung(en) ausgewählt aus der Gruppe bestehend aus Ethylenglykol, Propylenglykol, Diethylenglykol, Dipropylenglykol, Triethylenglykol, Tripropylenglykol, 1,4-Butandiol, 1,6-Hexandiol, Glycerin, Trimethylolpropan, Pentaerythrit, Ethylendiamin und Triethanolamin., besonders bevorzugt 1,2- und 1,3- Propylenglykol, Diethylenglykol, Glycerin, Trimethylolpropan und ganz besonders bevorzugt um 1,2- Propylenglykol, Glycerin und Trimethylolpropan.

In einer Ausführungsform der Erfindung ist das Polyetherpolyol B3) durch Copolymerisation des dritten Alkylenoxids an die dritte H-funktionelle Starterverbindung in Gegenwart eines dritten Katalysators erhältlich.

In einer Ausführungsform der Erfindung ist der dritte Katalysator Kaliumhydroxid, Natriumhydroxid, Cäsiumhydroxid ein Doppelmetallcyanid-Katalysator (DMC-Katalysator) und/oder ein Amin bevorzugt Kaliumhydroxid.

In einer Ausführungsform der Erfindung ist das dritte Alkylenoxid Propylenoxid und/oder Ethylenoxid, bevorzugt Propylenoxid.

Neben den in der isocyanatreaktiven Komponente B) erfindungsgemäß eingesetzten Polyole B1), B2) und B3) können erfindungsgemäß weitere Polyetherpolyole, weitere Polyesterpolyole, weitere Polyetheresterpolyole und/oder weitere Polycarbonatpolyole eingesetzt werden. Vorzugsweise werden in B) weitere Polyetherpolyole und/oder weitere Polyesterpolyole, besonders bevorzugt weitere weitere Polyetherpolyole eingesetzt.

Die weiteren in der isocyanatreaktiven Komponente B) eingesetzten Polyole können neben der OH-Funktion auch weitere gegenüber Isocyanat reaktive Wasserstoffatome (= aktive Wasserstoffatome) enthalten, wie beispielsweise NH-Gruppen und NH₂-Gruppen. Soweit solche weiteren aktiven Wasserstoffatome vorhanden sind, stammen bevorzugt mehr als 90 %, insbesondere mehr als 95 %, besonders bevorzugt mehr als 99 % und ganz besonders bevorzugt 100 % aller gegenüber Isocyanat reaktiven Wasserstoffatome in der isocyanatreaktiven Komponente aus OH-Funktionen.

Solche Polyole sind beispielsweise von Ionescu in "Chemistry and Technology of Polyols for Polyurethanes", Rapra Technology Limited, Shawbury 2005, S.31 ff. (Kap. 3: The General Characteristics of Oligo-Polyols, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben.

Bevorzugt werden in der isocyanatreaktiven Komponente B) Polyole eingesetzt, welche auf an sich bekannte Weise durch Polyaddition von Alkylenoxiden wie Propylenoxid und/oder Ethylenoxid an H-funktionelle Starterverbindungen in Gegenwart von Katalysatoren hergestellt werden können. Bevorzugt werden die Polyhydroxypolyether aus einer H-funktionellen Starterverbindung mit durchschnittlich 2 bis 8 aktiven Wasserstoffatomen und einem oder mehreren Alkylenoxiden, z.B. Ethylenoxid, Butylenoxid und/oder Propylenoxid, hergestellt. Bevorzugte Starterverbindungen sind Moleküle mit zwei bis acht Hydroxylgruppen pro Molekül wie Wasser, Ethylenglykol, Propylenglykol, Diethylenglykol, Dipropylenglykol, Triethylenglykol, Tripropylenglykol, 1,4-Butandiol, 1,6-Hexandiol, Glycerin, Trimethylolpropan, Pentaerythrit, Sorbit und Saccharose und aminische Starterverbindungen wie z.B. Ethylendiamin und Triethanolamin. Die Starterverbindungen können allein oder im Gemisch verwendet werden. Besonders bevorzugt sind 1,2- und 1,3- Propylenglykol, Diethylenglykol, Sorbit, Glycerin, Trimethylolpropan, Saccharose und Gemische aus den genannten Produkten. Vertreter für die isocyanatreaktiven Komponente B) sind z.B. im Kunststoff-Handbuch, Band VII "Polyurethane", 3. Auflage, Carl Hanser Verlag, München / Wien, 1993, Seiten 57 - 67 bzw. Seiten 88 - 90 beschrieben.

Bei den Polyesterpolyolen handelt es sich um Estergruppen aufweisende Polyhydroxylverbindungen wie z.B. Ricinusöl oder Polyhydroxypolyester, wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind.

Als Katalysator B4) können beispielsweise die bekannten Polyurethankatalysatoren eingesetzt werden, z.B. organische Metallverbindungen, wie Kalium- oder Natriumsalze organischer Carbonsäuren, z.B. Kaliumacetat; ebenso Zinn-(II)-salze von organischen Carbonsäuren, z.B. Zinn-(II)-acetat, Zinn-(II)-octoat, Zinn-(II)-ethylhexanoat und Zinn-(II)-laurat und die Dialkylzinn-(IV)-salze von organischen Carbonsäuren, z.B. Dibutylzinndiacetat, Dibutylzinndilaurat, Dimethylzinndilaurat, Dibutylzinnmaleat und Dioctylzinndiacetat, weiterhin beispielsweise Diisooctyl-2,2'-[(dioctylstannylen)bis(thio)]diacetat, Di-n-butyl-bis(dodecylthio)-Zinn, Monooctylzinnisooctylthioglykolat, Isooctylmercaptoacetat, 2-Ethylhexyl-4,4' -dibutyl-10-ethyl-7-oxo-8-oxa-3,5-dithia-4-stannatetradecanoat, Dimethylzinndithioglycolat und/oder stark basische Amine wie 2,2,2-Diazabicyclooctan, N,N-Dimethylaminopropylamin, N,N-bis(3-dimethylaminopropyl)-N-isopropanolamin, Triethylamin, Triethylendiamin, Tetramethylhexamethylendiamin, Pentamethyldiethylentriamin, N,N-Dimethylcyclohexylamin oder Bis(N,N-Dimethylaminoethyl)ether, N,N-Dimethylbenzylamin, N,N-Methyldibenzylamin und N-Methylimidazol, und latente Katalysatoren. Latente Katalysatoren und ihr Wirkmechanismus werden beispielsweise in EP 2531538 A1, Seiten 1 - 4 sowie Seite 9, Zeile 26 bis Seite 10, Zeile 2 beschrieben. Typische latente Katalysatoren sind blockierte Amin- und Amidin-Katalysatoren, z.B. Katalysatoren der Hersteller Air Products (wie z.B. Polycat^{®} SA-1/10, Dabco KTM 60) und Tosoh Corporation (wie etwa Toyocat^{®} DB 2, DB 30, DB 31, DB 40, DB 41, DB 42, DB 60, DB 70). Weitere Vertreter von Katalysatoren sowie Einzelheiten über die Wirkungsweise der Katalysatoren sind im Kunststoff-Handbuch, Band VII "Polyurethane", 3. Auflage, Carl Hanser Verlag, München / Wien, 1993 auf den Seiten 104 - 110 beschrieben.

In einer Ausführungsform der Erfindung beträgt die Menge des Katalysators B4) 0.05 Gew.-% bis 5 Gew.-% bevorzugt 0.05 Gew.-% bis 2 Gew.-% bezogen auf die Summe der Mengen an B), C) und D).

Als Trocknungsmittel B5) werden bevorzugt bei Raumtemperatur, das heißt 25 °C, flüssige Trocknungsmittel (Wasserbinder) oder gelöste Trocknungsmittel (Wasserbinder) eingesetzt. Im Sinne dieser Anmeldung werden die Begriffe "Trocknungsmittel" und "Wasserbinder" synonym verwendet.

In einer Ausführungsform der Erfindung beträgt die Menge an Trocknungsmittel B5) höchstens 5 Gew.-% bevorzugt höchstens 2 Gew.-%, jeweils bezogen auf die Summe der Mengen an B), C) und D.

In einer bevorzugten Ausführungsform der Erfindung beträgt die Menge an Trocknungsmittel B5) 0.05 Gew.-% bis 5 Gew.-%, bevorzugt 0.05 Gew.-% bis 2 Gew.-%, jeweils bezogen auf die Summe der Mengen an B), C) und D).

Gemäß der vorliegenden Erfindung ist das Trocknungsmittel B5) ein Trialkylorthoformat, ein p-Toluolsulfonylisocyanat, ein Oxazolidin oder Mischungen daraus, bevorzugt ein Oxazolidin.

In einer bevorzugten Ausführungsform ist das Trocknungsmittel B5) ein Oxazolidin, und das Oxazolidin 3-ethyl-2-methyl-2-(3-methylbutyl)-1,3-oxazolidin und/oder N-Butyl-2(1-ethylpentyl)-1,3-oxazolidin, besonders bevorzugt N-Butyl-2(1-ethylpentyl)-1,3-oxazolidin.

Als interne Trennmittel C) können alle bei der Herstellung von Polyurethanen üblichen Trennmittel verwendet werden, beispielsweise langkettige Monocarbonsäuren, insbesondere Fettsäuren wie Stearinsäure, Amine langkettiger Carbonsäuren wie Stearinamid, Fettsäureester, Metallsalze langkettiger Fettsäuren wie Zinkstearat, oder Silikone. Besonders geeignet sind die speziell für die Pultrusion erhältlichen internen Trennmittel, z. B. MOLD WIZ INT-1948 MCH, MOLD WIZ INT-1947 MCH, MOLD WIZ INT-1960 MCH, erhältlich von Axel Plastics oder Luvotrent TL HB 550-D, Luvotrent TL HB 550, erhältlich von Lehmann&Voss. Die internen Trennmittel werden in Mengen von 0,1-8 Gew.-%, bevorzugt 0,1-6 Gew.-% und besonders bevorzugt 0,1-4 Gew.-%, bezogen auf das Gesamtgewicht von B) eingesetzt.

Als weitere Hilfs- und Zusatzmittel D) können alle zur Herstellung von Polyurethanen bekannten Hilfs- und Zusatzmittel verwendet werden. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben. Genannt seien beispielsweise oberflächenaktive Substanzen, Entschäumer, Emulgatoren, Viskositätserniedriger, Farbstoffe, Pigmente, Flammschutzmittel, und Haftvermittler. Ein weiterer Gegenstand der Erfindung betrifft Polyurethan-Kompositwerkstoffe umfassend aus dem erfindungsgemäßen Polyurethanreaktivsystem erhältliches Polyurethan und ein Fasermaterial.

Bevorzugt handelt es sich bei dem Fasermaterial um mindestens eines von anorganischem Fasermaterial, organischem Fasermaterial, metallischem Fasermaterial, Naturfasermaterial und Kombinationen daraus, insbesondere Glasfasermaterial und Kohlenstofffasermaterial oder Kombinationen daraus, besonders bevorzugt Kohlenstofffasermaterial.

Ein weiterer Gegenstand der Erfindung ist ein Verfahren zur Herstellung der erfindungsgemäßen Polyurethanpultrudate umfassend die Schritte
i) Mischen der Komponenten A), B), C) und gegebenenfalls D), um ein Polyurethanreaktivsystem zu erhalten,
ii) Fördern des Polyurethanreaktivsystems aus Schritt i) in eine Injektionsbox,
iii) gleichzeitig zum Verfahrensschritt ii) Einleiten von Fasermaterial durch die Injektionsbox, um ein mit dem Polyurethanreaktivsystem getränktes Fasermaterial zu erhalten,
iv) Einleiten des mit dem Polyurethanreaktivsystem getränkten Fasermaterials in ein geheiztes Aushärtewerkzeug,
v) Aushärten des mit dem Polyurethanreaktivsystem getränkten Fasermaterials im Aushärtewerkzeug, um ein Polyurethanpultrudat zu erhalten,
vi) Ziehen des Polyurethanpultrudates aus Schritt v) aus dem Aushärtewerkzeug mittels eines Zugmechanismus,
vii) Schneiden des aus dem Aushärtewerkzeug gezogenen Polyurethanpultrudates auf die gewünschte Länge.

Die Vermischung der Komponenten A), B), C) und gegebenenfalls D) kann dabei in für die Herstellung von Polyurethanreaktivgemischen üblicher Weise erfolgen, beispielsweise im Hochdruck- oder Niederdruckverfahren. Bevorzugt werden die Komponenten B), C) und gegebenenfalls D) vorgemischt und die resultierende Mischung mit der Komponente A) vermischt.

Die Temperatur bei Tränkung des Fasermaterials im Verfahrensschritt iii) beträgt bevorzugt 0 - 75 °C, besonders bevorzugt 10 - 50 °C und ganz besonders bevorzugt 15 - 35 °C. Der Aushärtungsschritt v) findet bevorzugt bei einer Temperatur des Aushärtewerkzeugs von 140 - 220 °C statt, wobei das Aushärtewerkzeug bevorzugt mehrere, beispielsweise 3 oder 4 Zonen unterschiedlicher Temperatur aufweist.

Das Fasermaterial liegt als Endlosfasern vor. Endlosfasern bedeutet im Sinne dieser Anmeldung dem Fachmann bekannte Fasern, z.B. anorganische Fasern, organische Fasern, metallische Fasern, Naturfasern, bevorzugt Glasfasern und Kohlenstofffasern, besonders bevorzugt Kohlenstofffasern. Dabei wird unter Endlosfaser ein Fasermaterial verstanden, das eine Länge von mindestens mehreren Metern aufweist. Diese werden beispielsweise von Rollen oder Spulen abgewickelt. Dabei können als Fasermaterial Einzelfasern, sogenannte Faserrovings, geflochtene Fasern, Fasermatten, Fasergelege und Fasergewebe eingesetzt werden. Insbesondere bei Faserverbünden wie geflochtenen Fasern, verdrillten Fasern oder Fasergeweben können in den in diesen Faserverbünden enthaltenen Einzelfasern auch kürzere Einzelfasern enthalten sein. Der Faserverbund selbst muss aber als Endlosmaterial vorliegen. In einer bevorzugten Ausführungsform der Erfindung werden die Fasern in Form von Faserrovings eingesetzt.

In einer weiteren, bevorzugten Ausführungsform der Erfindung werden im Verfahrensschritt iii) zusätzlich zu dem Fasermaterial Abreißgewebe (sogenannte Peel Plies) derart durch die Injektionsbox geführt, dass diese vorzugsweise mindestens zwei Außenseiten des fertigen Polyurethanpultrudates bilden. Bei der Weiterverarbeitung der erfindungsgemäßen Polyurethanpultrudate kann dieses Abreißgewebe unter Ausbildung mindestens zweier rauer Oberflächen auf den Außenseiten entfernt werden, wodurch beispielsweise eine Verklebung der Poylurethanpultrudate erleichtert wird.

Die erfindungsgemäßen Polyurethanpultrudate können beispielsweise zur Herstellung von Verstärkungsprofilen oder Strukturelementen im Fahrzeugbau, Flugzeugbau oder von Windkraftanlagen verwendet werden. Derartige leichte Verstärkungsprofile können beispielsweise zur Herstellung sogenannter "Spar Caps" in Rotorblättern von Windkraftanlagen eingesetzt werden.

Die Erfindung soll in den nachfolgenden Beispielen näher erläutert werden.

### Beispiele

Eingesetzt wurde eine Pultrusionsanlage mit einem beheizbaren Formwerkzeug mit 60 mm x 5 mm Innenmaß und einer vor dem Formwerkzeug angebrachten Injektionsbox. Dementsprechend wurden Rechteckprofile mit 60 mm Breite und 5 mm Wandstärke hergestellt. Als Fasermaterial wurden Kohlenstofffaser-Rovings (Pyrofil^{®} TRW 40 50L KNA der Fa. Mitsubishi Rayon Co. Ltd.) verwendet und durch die Injektionsbox und das Formwerkzeug gezogen. Die Konzentration an Fasern im fertigen Profil betrug ca. 65 Vol.-%. Die in Tabelle 1 aufgeführten Polyolgemische wurden jeweils mit der angegebenen Menge an internem Trennmittel versetzt und intensiv verrührt. Diese Mischungen wurden jeweils mittels einer Niederdruckmischmaschine mit Statikmischer bei 23 °C mit so viel Isocyanat vermischt, dass der jeweilige, in Tabelle 1 angegebene NCO-Index vorlag, und das entstehende Polyurethan-Reaktivsystem wurde kontinuierlich in die Injektionsbox injiziert. Die getränkten Verstärkungsfasern wurden mit dem Abzugsmechanismus der Pultrusionsanlage kontinuierlich durch das beheizte Formwerkzeug gezogen und ausgehärtet. Die Temperierung des Werkzeugs war in 3 Zonen unterteilt mit Temperaturen von 170 °C in Zone 1 (Werkzeug-Eingang in Abzugsrichtung), 200 °C in Zone 2 (Werkzeug-Mitte) und 220 °C in Zone 3 (Werkzeug-Ausgang). Anschließend wurden die fertigen Profile kontinuierlich auf die gewünschte Länge geschnitten.

Folgende Ausgangsstoffe wurden eingesetzt:
Isocyanatkomponente A)
   MDI 1: Polymeres MDI mit einem NCO-Gehalt von 32,4 Gew.-%, einem Gehalt an monomerem MDI von 80 Gew.-%; der Gehalt an 2,4'-MDI und 2,2'-MDI beträgt in Summe 25 Gew.-% von Fa. Covestro Deutschland AG.
Isocyanatreaktive Komponente B)
Polyetherpolyols B1)
   Polyol 6: Polyetherpolyol mit einer OHZ = 29 mg KOH/g. und einem Propylenoxid (PO)-Anteil von 78.1 Gew.-% bezogen auf die Masse an eingesetztem PO und EO und einem Ethylenoxid (EO) Anteil von 21.9 Gew.-% auf die Masse an eingesetztem PO und EO, erhältlich durch Umsetzung Glycerin (F=3) mit Propylenoxid in Gegenwart eines KOH-Katalysators und anschließende Umsetzung des propoxylierten Intermediats mit Ethylenoxid unter Bildung eines Polyetherpolyol-Blockcopolymers
Polyetherpolyols B2)
   Polyol 2: Glycerin gestartetes Triol, propoxyliert, OHZ = 1050 mg KOH/g
Polyetherpolyols B3)
   Polyol 1: Glycerin gestartetes Triol, propoxyliert, OHZ = 235 mg KOH/g
   Polyol 3: Glycerin gestartetes Triol, propoxyliert, OHZ = 400 mg KOH/g
   Polyol 5: Propylenglykol gestartetes Diol, propoxyliert, OHZ = 515 mg KOH/g
Weitere Polyetherpolyole
   Polyol 4: Propylenglykol gestartetes Diol, propoxyliert, OHZ = 28 mg KOH/g
   Polyol 7: Polyethermonol mit einer OHZ = 33 mg KOH/g. und einem Propylenoxid (PO)-Anteil von 52.9 Gew.-% bezogen auf die Masse an eingesetztem PO und EO und einem Ethylenoxid (EO) Anteil von 47.1 Gew.-% auf die Masse an eingesetztem PO und EO, erhältlich durch Umsetzung Butyldiglykol (F=1) mit Propylenoxid und Ethylenoxids in Gegenwart eines KOH-Katalysators und anschließende Umsetzung dieses Intermediats mit Propylenoxid unter Bildung eines Polyethermonol-Blockcopolymers.
Katalysatoren B4)
   Katalysator: Diisooctyl-2,2'-[(dioctylstannylen)bis(thio)]diacetat
Trocknungsmittel B5) als Wasserbinder
   Wasserbinder 1: MOLSIV^{®} L - Pulver von Fa. UOP
   Wasserbinder 2: Incozol-2 (N-Butyl-2(1-ethylpentyl)-1,3-oxazolidin) von Fa. Incorez
Trennmittel C)
   Internes Trennmittel (IMR): Luvotrent^{®} TL HB 550 von Lehmann&Voss für die Pultrusion

Alle Mengen in Tabelle 1 sind in Gewichtsteilen angegeben. Die mechanischen Kennwerte wurden nach folgenden Methoden bestimmt:
- Biegespannung transversal: DIN EN ISO 14125
- Biegespannung axial: DIN EN ISO 178
- Interlaminare Scherfestigkeit (ILSS) transversal: DIN EN ISO 14130
- ILSS axial: DIN EN ISO 14130

Zusätzlich wurden bei der Herstellung der Polyurethanpultrudate die Abzugskraft und die Abzugsgeschwindigkeit an der Pultrusionsanlage bestimmt, sowie die Fasertränkung, Oberflächengüte und das Auftreten von Abrieb optisch bewertet.

Die Prüfung auf Einphasigkeit der eingesetzten isocyanatreaktiven Komponenten erfolgte ebenfalls optisch. Dazu wurden die in den Bsp. 1 - 6 eingesetzten isocyanatreaktiven Komponenten für 6 Monate bei Raumtemperatur in durchsichtigen Kunststoffbehältern aufbewahrt und in regelmäßigen Abständen optisch untersucht. Mehrphasigkeit beschreibt dabei das Auftreten jeglicher Inhomogenität, wie z.B. Phasentrennung, Trübung und Tröpfchenbildung. Dem folgend weist eine einphasige isocyanatreaktive Komponente über 6 Monate bei Raumtemperatur keine dieser Effekte auf. Es handelt sich bei einer einphasigen isocyanatreaktiven Komponente um eine homogene, klare Flüssigkeit. Eine einphasige isocyanatreaktive Komponente weist zudem ebenfalls durch Zentrifugieren bei 6000 U/min für 30 Minuten keine der oben genannten Effekte der Mehrphasigkeit auf.

**Tabelle 1**

| | **Bsp. 1** | **Bsp. 2 (Vgl.)** | **Bsp. 3 (Vgl.)** | **Bsp. 4 (Vgl.)** | **Bsp. 5 (Vgl.)** | **Bsp. 6 (Vgl.)** |
|---|---|---|---|---|---|---|
| **Polyol 1** | 26.47 | 28.47 | 26.47 | 28.47 | 28.47 | 27.90 |
| **Polyol 2** | 26.53 | 26.00 | 26.53 | 26.00 | 26.00 | 25.48 |
| **Polyol 3** | 29.80 | 23.81 | 29.80 | 23.81 | 23.81 | 23.34 |
| **Polyol 4** | | 9.79 | | 9.79 | 9.79 | |
| **Polyol 5** | 8.90 | 9.26 | 8.897 | 9.26 | 9.26 | 9.08 |
| **Polyol 6** | 7.30 | | 7.30 | | | |
| **Polyol 7** | | | | | | 11.88 |
| **Wasserbinder 1** | | 2.00 | | | | |
| **Wasserbinder 2** | 0.50 | | | | 0.50 | 0.50 |
| **Katalysator 1** | 0.50 | 0.67 | 0.50 | 0.67 | 0.67 | 1.47 |
| **IMR** | 4 | 4 | 4 | 4 | 4 | 4 |
| **Isocyanat** | MDI 1 | MDI 1 | MDI 1 | MDI 1 | MDI 1 | MDI 1 |
| **Index** | 115 | 115 | 115 | 115 | 115 | 115 |
| **Feststoff im Polyol** | Nein | Ja | Nein | Nein | Nein | Nein |
| **Polyol einphasig** | Ja | Nein | Ja | Nein | Nein | Ja |
| **Abzugskraft < 3 kN** | Ja | Ja | Nein | Nein | Nein | Nein |
| **Abzugsgeschwindigkeit** | 1.5 m/min | 1.5 m/min | max 0.9 m/min | max 0.9 m/min | max. 1.1 m/min | max. 1.3 m/min |
| **Fasertränkung** | sehr gut | sehr gut | gut | gut | sehr gut | sehr gut |
| **Oberfläche** | sehr gut | sehr gut | streifig, matt | streifig, matt | gut | sehr gut |
| **Abrieb** | Nein | Nein | Ja | Ja | Nein | Nein |
| **Biegespannung transversal >130 MPa** | Ja | Ja | Nein | Nein | Nein | Nein |
| **Biegespannung axial > 1100 MPa** | Ja | Ja | Nein | Nein | Nein | Ja |
| **ILSS transversal > 14 MPa** | Ja | Ja | Nein | Nein | Nein | Nein |
| **ILSS axial > 70 MPa** | Ja | Ja | Nein | Nein | Nein | Nein |

Bsp. 1 entspricht der erfindungsgemäßen Zusammensetzung. Die isocyanatreaktive Komponente ist feststofffrei und einphasig, man erhält eine gute Verarbeitbarkeit und gute mechanische Eigenschaften des Pultrudates.

Bsp. 2 stellt eine bekannte Systemzusammensetzung auf Basis einer zeolith-basierten (Wasserbinder 1), d.h. einer feststoffhaltigen und somit phaseninstabilen isocyanatreaktiven Komponente dar. Das erfindungsgemäße Reaktivsystem weist gegenüber dieser bekannten Zusammensetzung den Vorteil auf, dass Pumpen und Filter keinen Feststoffen ausgesetzt werden und der Transport und die Verarbeitbarkeit einfacher bzw. besser sind.

Die Bsp. 3 und 4 zeigen, dass die Systeme 1 und 2 ohne die Verwendung eines Wasserbinders schlechtere Verarbeitbarkeit und schlechtere mechanische Eigenschaften aufweisen. Dies belegt, dass feststofffreie, einphasige Reaktivsysteme per se nicht ausreichen, um gute Verarbeitbarkeit mit guten mechanischen Eigenschaften der erhaltenen Pultrudate zu vereinen.

Bsp. 5 zeigt, dass ein simpler Austausch des Wasserbinders 1 gegen Wasserbinder 2 bei ansonsten identischer Zusammensetzung der isocyanatreaktiven Komponente zu Bsp. 2 zwar zu einem feststofffreien System führt, aber dadurch noch keine gute Verarbeitbarkeit und mechanische Eigenschaften des Pultrudates gewährleistet sind. Darüber hinaus bleibt das System aufgrund der Polyether-Zusammensetzung mehrphasig, mit den bereits oben genannten Nachteilen bei der Verarbeitung.

Bsp. 6 zeigt ebenfalls ein feststofffreies, einphasiges System. Allerdings wird deutlich, dass nur eine erfindungsgemäße Zusammensetzung der Komponente B) auch zu Pultrudaten mit guten mechanischen Eigenschaften führt.

## Patentansprüche

1. Polyurethanreaktivsystem umfassend
eine Isocyanatkomponente A),
eine isocyanatreaktive Komponente B) umfassend
3 - 13 Gew.-% eines Polyetherpolyols B1) mit einer Hydroxylzahl (OHZ) von 20 bis 50 mg KOH/g, erhältlich aus der Umsetzung eines ersten H-funktionellen Starterverbindung mit einer Funktionalität f von ≥2 bis ≤4 mit Ethylenoxid und Propylenoxid,
15 - 37 Gew.-% eines Polyetherpolyols B2) mit einer Hydroxylzahl (OHZ) von 900 - 1100 mg KOH/g, erhältlich aus der Umsetzung einer zweiten H-funktionellen Starterverbindung mit einer Funktionalität f von ≥2 bis ≤4 mit einem zweiten Alkylenoxid,
50 - 72 Gew.-% eines Polyetherpolyols B3) mit einer Hydroxylzahl (OHZ) > 50 bis < 900 mg KOH/g, erhältlich aus der Umsetzung einer dritten H-funktionellen Starterverbindung mit einem dritten Alkylenoxid,
einen oder mehrere Katalysatoren B4) und
ein Trocknungsmittel B5), das ein Trialkylorthoformat, ein p-Toluolsulfonylisocyanat, ein Oxazolidin oder Mischungen daraus ist,
wobei die Summe der Gew.-% der Komponenten B1) und B2) ≤ 40 Gew.-%, bezogen auf die Summe der Mengen an B), C) und D), beträgt, und die Summe der Gew.-% der Komponenten B1), B2), B3), B4) und B5) ≥ 90 Gew.-%, bezogen auf die Summe der Mengen an B), C) und D), beträgt,
ein internes Trennmittel C),
sowie gegebenenfalls weitere Hilfs- und Zusatzstoffe D),
wobei die Summe der Gew.-% der Komponenten B), C) und gegebenenfalls D) 100 Gew.-% beträgt,
und wobei die Hydroxylzahlen (OHZ) der Polyetherpolyole B1), B2) und B3) mittels ISO 14900 bestimmt wurde.

2. Polyurethanreaktivsystem gemäß Anspruch 1, wobei die Komponenten A), B), C) und gegebenenfalls D) in solchen Mengen eingesetzt werden, dass das Verhältnis der Anzahl der NCO-Gruppen in (A) zu der Summe der Anzahl der OH-isocyanatreaktiven-Gruppen in (B), (C) und (D) multipliziert mit 100 einen Wert von 100-150 aufweist.

3. Polyurethanreaktivsystem gemäß Anspruch 1 oder 2, wobei die Menge an Trocknungsmittel B5) höchstens 5 Gew.-% bevorzugt höchstens 2 Gew.-%, jeweils bezogen auf die Summe der Mengen an B), C) und D), beträgt.

4. Polyurethanreaktivsystem gemäß einem der Ansprüche 1 bis 3, wobei die Menge an Trocknungsmittel B5) 0.05 Gew.-% bis 5 Gew.-%, bevorzugt 0.05 Gew.-% bis 2 Gew.-% bezogen auf die Summe der Mengen an B), C) und D) beträgt.

5. Polyurethanreaktivsystem gemäß einem der Ansprüche 1 bis 4, wobei das Trocknungsmittel B5) ein Oxazolidin ist.

6. Polyurethanreaktivsystem gemäß Anspruch 5, wobei das Oxazolidin 3-ethyl-2-methyl-2-(3-methylbutyl)-1,3-oxazolidin und/oder N-Butyl-2(1-ethylpentyl)-1,3-oxazolidin, besonders bevorzugt N-Butyl-2(1-ethylpentyl)-1,3-oxazolidin ist.

7. Polyurethanreaktivsystem gemäß einem der Ansprüche 1 bis 7, wobei für das Polyetherpolyol B1) der Massenanteil an Propylenoxid 60 bis 90 Gew.-%, bevorzugt 70 bis 85 Gew.-% bezogen auf die Summe an eingesetztem Ethylenoxid und Propylenoxid beträgt.

8. Polyurethanreaktivsystem gemäß einem der Ansprüche 1 bis 7, wobei das Polyetherpolyol B1) erhältlich ist durch
i) Umsetzung der ersten H-funktionellen Starterverbindung mit Propylenoxid in Gegenwart eines ersten Katalysators unter Bildung eines ersten Intermediats
ii) Umsetzung des ersten Intermediats mit Ethylenoxid.

9. Polyurethanreaktivsystem gemäß Anspruch 8, wobei der erste Katalysator Kaliumhydroxid, Natriumhydroxid, Cäsiumhydroxid, ein Doppelmetallcyanid-Katalysator (DMC-Katalysator) und/oder ein Amin, bevorzugt Kaliumhydroxid ist.

10. Polyurethanreaktivsystem gemäß einem der Ansprüche 1 bis 9, wobei das zweite Alkylenoxid Propylenoxid und/oder Ethylenoxid, bevorzugt Propylenoxid ist.

11. Polyurethanreaktivsystem gemäß einem der Ansprüche 1 bis 10, wobei das dritte Alkylenoxid Propylenoxid und/oder Ethylenoxid, bevorzugt Propylenoxid ist.

12. Polyurethanreaktivsystem gemäß einem der Ansprüche 1 bis 11, wobei die Menge des Katalysators B4) 0.05 Gew.-% bis 5 Gew.-% bevorzugt 0.05 Gew.-% bis 2 Gew.-% bezogen auf die Summe der Mengen an B), C) und D) beträgt.

13. Polyurethan-Kompositwerkstoff, umfassend Polyurethan, erhältlich aus dem Polyurethanreaktivsystem gemäß einem der Ansprüch 1 bis 12, und ein Fasermaterial.

14. Pultrusionsverfahren zur Herstellung eines Polyurethan-Kompositwerkstoffs gemäß Anspruch 13, umfassend die Schritte
i) Mischen der Komponenten A), B), C), und gegebenenfalls D), um ein Polyurethanreaktivsystem gemäß einem der Ansprüche 1 bis 3 zu erhalten,
ii) Fördern des Polyurethanreaktivsystems aus Schritt i) in eine Injektionsbox,
iii) gleichzeitig zum Verfahrensschritt ii) Einleiten von Fasermaterial durch die Injektionsbox, um ein mit dem Polyurethanreaktivsystem getränktes Fasermaterial zu erhalten,
iv) Einleiten des mit dem Polyurethanreaktivsystems getränkten Fasermaterials in ein geheiztes Aushärtewerkzeug,
v) Aushärten des mit dem Polyurethanreaktivsystem getränkten Fasermaterials im Aushärtewerkzeug, um ein Polyurethanpultrudat zu erhalten,
vi) Ziehen des Polyurethanpultrudates aus Schritt v) aus dem Aushärtewerkzeug mittels eines Zugmechanismus,
vii) Schneiden des aus dem Aushärtewerkzeug gezogenen Polyurethanpultrudates auf die gewünschte Länge.

15. Verwendung eines Polyurethan-Kompositwerkstoffs gemäß Anspruch 13 zur Herstellung von Verstärkungsprofilen oder Strukturbauteilen oder Strukturelementen im Fahrzeugbau, Flugzeugbau oder von Windkraftanlagen.

## Claims

1. Polyurethane reactive system comprising
an isocyanate component A),
an isocyanate-reactive component B) comprising
3-13% by weight of a polyether polyol B1) having a hydroxyl number (OHN) of 20 to 50 mg KOH/g obtainable by reaction of a first H-functional starter compound having a functionality f of ≥2 to ≤4 with ethylene oxide and propylene oxide,
15-37% by weight of a polyether polyol B2) having a hydroxyl number (OHN) of 900-1100 mg KOH/g obtainable by reaction of a second H-functional starter compound having a functionality f of ≥2 to ≤4 with a second alkylene oxide,
50-72% by weight of a polyether polyol B3) having a hydroxyl number (OHN) > 50 to < 900 mg KOH/g obtainable by reaction of a third H-functional starter compound with a third alkylene oxide,
one or more catalysts B4) and
a drying agent B5) which is a trialkyl orthoformate, a p-toluenesulfonyl isocyanate, an oxazolidine or mixtures thereof,
wherein the sum of the % by weight of the components B1) and B2) is ≤ 40% by weight based on the sum of the amounts of B), C) and D) and the sum of the % by weight of the components B1), B2), B3), B4) and B5) is ≥ 90% by weight based on the sum of the amounts of B), C) and D),
an internal release agent C),
and optionally further auxiliary and additive substances D),
wherein the % by weight of the components B), C) and optionally D) sum to 100% by weight,
and wherein the hydroxyl numbers (OHN) of the polyether polyols B1), B2) and B3) were determined using ISO 14900.

2. Polyurethane reactive system according to Claim 1, wherein the components A), B), C) and optionally D) are employed in amounts such that the ratio of the number of NCO groups in (A) to the sum of the number of OH isocyanate-reactive groups in (B), (C) and (D) multiplied by 100 has a value of 100-150.

3. Polyurethane reactive system according to Claim 1 or 2, wherein the amount of drying agent B5) is not more than 5% by weight, preferably not more than 2% by weight, in each case based on the sum of the amounts of B), C) and D).

4. Polyurethane reactive system according to any of Claims 1 to 3, wherein the amount of drying agent B5) is 0.05% by weight to 5% by weight, preferably 0.05% by weight to 2% by weight, based on the sum of the amounts of B), C) and D).

5. Polyurethane reactive system according to any of Claims 1 to 4, wherein the drying agent B5) is an oxazolidine.

6. Polyurethane reactive system according to Claim 5, wherein the oxazolidine is 3-ethyl-2-methyl-2-(3-methylbutyl)-1,3-oxazolidine and/or N-butyl-2-(1-ethylpentyl)-1,3-oxazolidine, particularly preferably N-butyl-2-(1-ethylpentyl)-1,3-oxazolidine.

7. Polyurethane reactive system according to any of Claims 1 to 7, wherein for the polyether polyol B1) the mass fraction of propylene oxide is 60% to 90% by weight, preferably 70% to 85% by weight, based on the sum of ethylene oxide and propylene oxide employed.

8. Polyurethane reactive system according to any of Claims 1 to 7, wherein the polyether polyol B1) is obtainable by
i) reacting the first H-functional starter compound with propylene oxide in the presence of a first catalyst to form a first intermediate
ii) reacting the first intermediate with ethylene oxide.

9. Polyurethane reactive system according to Claim 8, wherein the first catalyst is potassium hydroxide, sodium hydroxide, cesium hydroxide, a double metal cyanide catalyst (DMC catalyst) and/or an amine, preferably potassium hydroxide.

10. Polyurethane reactive system according to any of Claims 1 to 9, wherein the second alkylene oxide is propylene oxide and/or ethylene oxide, preferably propylene oxide.

11. Polyurethane reactive system according to any of Claims 1 to 10, wherein the third alkylene oxide is propylene oxide and/or ethylene oxide, preferably propylene oxide.

12. Polyurethane reactive system according to any of Claims 1 to 11, wherein the amount of the catalyst B4) is 0.05% by weight to 5% by weight, preferably 0.05% by weight to 2% by weight, based on the sum of the amounts of B), C) and D).

13. Polyurethane composite material comprising polyurethane obtainable from the polyurethane reactive system according to any of Claims 1 to 12 and a fiber material.

14. Pultrusion process for producing a polyurethane composite material according to Claim 13, comprising the steps of
i) mixing the components A), B), C) and optionally D) to obtain a polyurethane reactive system according to any of Claims 1 to 3,
ii) conveying the polyurethane reactive system from step i) into an injection box,
iii) simultaneously with process step ii) introducing fiber material through the injection box to obtain a fiber material impregnated with the polyurethane reactive system,
iv) introducing the fiber material impregnated with the polyurethane reactive system into a heated curing mold,
v) curing the fiber material impregnated with the polyurethane reactive system in the curing mold to obtain a polyurethane pultrudate,
vi) pulling the polyurethane pultrudate from step v) out of the curing mold using a pulling mechanism,
vii) cutting the polyurethane pultrudate pulled from the curing mold to the desired length.

15. Use of a polyurethane composite material according to Claim 13 for the production of reinforcing profiles or structural components or structural elements in vehicle construction, aircraft construction or of wind power plants.

## Revendications

1. Système réactif polyuréthane, comprenant
un composant isocyanate A),
un composant B) réactif avec un isocyanate, comprenant
3 - 13 % en poids d'un polyétherpolyol B1) ayant un indice d'hydroxyle (IOH) de 20 à 50 mg de KOH/g, pouvant être obtenu par la mise en réaction d'un premier composé de départ à fonction H, ayant une fonctionnalité f de ≥ 2 à ≤ 4, avec de l'oxyde d'éthylène et de l'oxyde de propylène,
15 - 37 % en poids d'un polyétherpolyol B2) ayant un indice d'hydroxyle (IOH) de 900 à 1 100 mg de KOH/g, pouvant être obtenu par la mise en réaction d'un deuxième composé de départ à fonction H, ayant une fonctionnalité f de ≥ 2 à ≤ 4, avec un deuxième oxyde d'alkylène,
50 - 72 % en poids d'un polyétherpolyol B3) ayant un indice d'hydroxyle (IOH) de > 50 à < 900 mg de KOH/g, pouvant être obtenu par la mise en réaction d'un troisième composé de départ à fonction H avec un troisième oxyde d'alkylène,
un ou plusieurs catalyseurs B4) et
un desséchant B5) qui est un orthoformiate de trialkyle, un isocyanate de p-toluènesulfonyle, une oxazolidine ou des mélanges de ceux-ci,
la somme des % en poids des composants B1) et B2) étant ≤ 40 % en poids, par rapport à la somme des quantités de B), C) et D), et la somme des % en poids des composants B1), B2), B3), B4) et B5) étant ≥ 90 % en poids, par rapport à la somme des quantités de B), C) et D),
un agent de séparation interne C),
ainsi qu'éventuellement des adjuvants et additifs D) supplémentaires,
la somme des % en poids des composants B), C) et éventuellement D) étant égale à 100 % en poids,
et l'indice d'hydroxyle (IOH) des polyétherpolyols B1), B2) et B3) ayant été déterminés par ISO 14900.

2. Système réactif polyuréthane selon la revendication 1, dans lequel les composants A), B), C) et éventuellement D) sont utilisés en des quantités telles que le rapport du nombre des groupes NCO dans (A) à la somme du nombre des groupes OH réactifs avec des isocyanates dans (B), (C) et (D) multiplié par 100 a une valeur de 100-150.

3. Système réactif polyuréthane selon la revendication 1 ou 2, dans lequel la quantité de desséchant B5) est au maximum de 5 % en poids, de préférence au maximum 2 % en poids, chaque fois par rapport à la somme des quantités de B), C) et D).

4. Système réactif polyuréthane selon l'une quelconque des revendications 1 à 3, dans lequel la quantité de desséchant B5) vaut de 0,05 % en poids à 5 % en poids, de préférence 0,05 % en poids à 2 % en poids, par rapport à la somme des quantités de B), C) et D).

5. Système réactif polyuréthane selon l'une quelconque des revendications 1 à 4, dans lequel le desséchant B5) est une oxazolidine.

6. Système réactif polyuréthane selon la revendication 5, dans lequel l'oxazolidine est la 3-éthyl-2-méthyl-2-(3-méthylbutyl)-1,3-oxazolidine et/ou la N-butyl-2(1-éthylpentyl)-1,3-oxazolidine, de façon particulièrement préférée la N-butyl-2(1-éthylpentyl)-1,3-oxazolidine.

7. Système réactif polyuréthane selon l'une quelconque des revendications 1 à 7, dans lequel pour le polyétherpolyol B1) la proportion en masse d'oxyde de propylène vaut de 60 à 90 % en poids, de préférence 70 à 85 % en poids, par rapport à la somme d'oxyde d'éthylène et d'oxyde de propylène utilisés.

8. Système réactif polyuréthane selon l'une quelconque des revendications 1 à 7, dans lequel le polyétherpolyol B1) peut être obtenu par
i) mise en réaction du premier composé de départ à fonction H avec de l'oxyde de propylène en présence d'un premier catalyseur, avec formation d'un premier produit intermédiaire
ii) mise en réaction du premier produit intermédiaire avec de l'oxyde d'éthylène.

9. Système réactif polyuréthane selon la revendication 8, dans lequel le premier catalyseur est l'hydroxyde de potassium, l'hydroxyde de sodium, l'hydroxyde de césium, un catalyseur cyanure bimétallique (catalyseur DMC) et/ou une amine, de préférence l'hydroxyde de potassium.

10. Système réactif polyuréthane selon l'une quelconque des revendications 1 à 9, dans lequel le deuxième oxyde d'alkylène est l'oxyde de propylène et/ou l'oxyde d'éthylène, de préférence l'oxyde de propylène.

11. Système réactif polyuréthane selon l'une quelconque des revendications 1 à 10, dans lequel le troisième oxyde d'alkylène est l'oxyde de propylène et/ou l'oxyde d'éthylène, de préférence l'oxyde de propylène.

12. Système réactif polyuréthane selon l'une quelconque des revendications 1 à 11, dans lequel la quantité du catalyseur B4) vaut de 0,05 % en poids à 5 % en poids, de préférence 0,05 % en poids à 2 % en poids, par rapport à la somme des quantités de B), C) et D).

13. Matériau composite polyuréthane, comprenant du polyuréthane pouvant être obtenu à partir du système réactif polyuréthane selon l'une quelconque des revendications 1 à 12, et une matière fibreuse.

14. Procédé de pultrusion pour la production d'un matériau composite polyuréthane selon la revendication 13, comprenant les étapes
i) mélange des composants A), B), C), et éventuellement D), afin d'obtenir un système réactif polyuréthane selon l'une quelconque des revendications 1 à 3,
ii) acheminement du système réactif polyuréthane provenant de l'étape i) dans une boîte d'injection,
iii) en même temps que l'étape ii) du procédé, passage de matière fibreuse à travers la boîte d'injection, afin d'obtenir une matière fibreuse imprégnée avec le système réactif polyuréthane,
iv) introduction de la matière fibreuse imprégnée avec le système réactif polyuréthane dans un outil de durcissement chauffé,
v) durcissement de la matière fibreuse imprégnée avec le système réactif polyuréthane dans l'outil de durcissement, afin d'obtenir un produit de pultrusion polyuréthane,
vi) tirage du produit de pultrusion polyuréthane provenant de l'étape v) hors de l'outil de durcissement au moyen d'un mécanisme de tirage,
vii) découpe à la longueur désirée du produit de pultrusion polyuréthane tiré de l'outil de durcissement.

15. Utilisation d'un matériau composite polyuréthane selon la revendication 13 pour la fabrication de profilés de renforcement ou de composants structurels ou d'éléments structurels dans la construction de véhicules, la construction d'aéronefs ou la fabrication d'éoliennes.
